Europäisches Patentamt

(19) European Patent Office

Office européen des brevets

(11) Publication number: **0 178 833**
**B1**

(12) **EUROPEAN PATENT SPECIFICATION**

(45) Date of publication of patent specification: **19.04.89**

(21) Application number: **85307170.2**

(22) Date of filing: **07.10.85**

(51) Int. Cl.⁴: **B 01 D 53/04**

(54) Gas recovery.

(30) Priority: **18.10.84 GB 8426393**

(43) Date of publication of application:
**23.04.86 Bulletin 86/17**

(45) Publication of the grant of the patent:
**19.04.89 Bulletin 89/16**

(84) Designated Contracting States:
**AT BE CH DE FR GB IT LI LU NL SE**

(56) References cited:
EP-A-0 157 480
US-A-3 078 639
US-A-3 176 444
US-A-3 266 221
US-A-3 430 418
US-A-3 564 816
US-A-4 025 321
US-A-4 472 178

(73) Proprietor: **IMPERIAL CHEMICAL INDUSTRIES PLC**
**Imperial Chemical House Millbank**
**London SW1P 3JF (GB)**

(72) Inventor: **Haslett, Andrew Michael**
**9 Albert Road Eaglescliffe**
**Stockton-on-Tees Cleveland (GB)**
Inventor: **Johnson, John Brian Hansen**
**36 Rectory Row Sedgefield**
**Stockton-on-Tees Cleveland (GB)**

(74) Representative: **Gratwick, Christopher et al**
**Imperial Chemical Industries PLC Legal**
**Department: Patents PO Box 6 Bessemer Road**
**Welwyn Garden City Herts, AL7 1HD (GB)**

Courier Press, Leamington Spa, England.

# EP 0 178 833 B1

**Description**

This invention relates to gas recovery and in particular to a process for recovery of carbon dioxide from a mixture thereof with one or more other gases of lower boiling point.

It is often desired to recover carbon dioxide, ($CO_2$) from gas mixtures including hydrogen, ($H_2$), and one or more gases of medium boiling point such as nitrogen, ($N_2$), methane ($CH_4$), carbon monoxide, ($CO$), and argon, ($Ar$). Heretofore such $CO_2$ recovery has extensively been carried out by absorption in a liquid such as aqueous potash or an ethanolamine or a "physical" solvent and then expelling the $CO_2$ therefrom. Recently proposals have been made to recover the $CO_2$ by a pressure swing adsorption process using a solid adsorbent, but so far the $CO_2$ so recovered has been at such a low partial pressure that further processing is not economic.

We have now devised a pressure swing adsorption (PSA) process for recovering $CO_2$ at substantially higher efficiency, comparable with that at which low boiling gases are purified in known adsorptive processes.

According to the invention a process for the recovery of carbon dioxide from a mixture thereof with at least one medium boiling (MB) gas selected from nitrogen, methane, argon, and carbon monoxide, comprises a pressure swing adsorption sequence wherein

i) the mixture at elevated pressure is contacted with a first charge of a solid zeolite adsorbent effective to adsorb carbon dioxide preferentially;

ii) when the first charge of adsorbent is sufficiently loaded with carbon dioxide, the mixture flow is switched to a further charge of adsorbent which is fresh or regenerated; and

iii) a gas stream enriched in carbon dioxide as compared with the starting mixture is recovered by depressurising the first charge;

characterised in that mixture is fed to the adsorbent at a pressure in the range 25 to 50 bar abs and in that the adsorption and depressurisation steps are each conducted at temperatures in the range 120 to 200°C.

The gas mixture may also contain low boiling point gases such as hydrogen, helium, and neon. Helium will generally be present only in gas mixtures derived from natural gas. The gas mixture may also contain krypton and xenon, which are medium boiling point gases. Argon, krypton, xenon, and neon, will generally be present only in small amounts, if at all, in gas mixtures containing nitrogen which has been derived from air.

The problem of producing high purity $CO_2$ is particularly encountered when the $MB/CO_2$ volume ratio in the starting gas is above 0.1 and the invention is particularly applicable when this ratio is in the range 0.2 to 5. $CO_2/MB$ gas mixtures often contain $H_2$, usually in an amount of at least 10%, and typically at least 20%, v/v on a dry basis.

One important application of the invention is in recovering $CO_2$ from raw ammonia synthesis gas made by catalytic steam reforming or air/steam reforming of a volatile hydrocarbon feedstock followed by the shift reaction. Such a synthesis gas will normally have a $MB/CO_2$ ratio in the range 1 to 5, for example, 1.3 to 2.5, as in the process described in EP—A—0157480. The $H_2$ content of the starting gas is then usually at least 40, for example in the range 50 to 70, % v/v on a dry basis. As disclosed in that application, the $H_2/MB$ ratio is for example in the range 1.25 to 2.5, especially 1.5 to 2.1, by moles and, preferably, at least 90% v/v of the MB is $N_2$.

Another potentially important application of the invention is in recovering a $CO_2$ stream of low CO and $H_2$ content from a crude gas made by non-catalytic partial oxidation of a carbonaceous feedstock, especially heavy oil or coal. Such a gas is subjected to the shift reaction to an extent depending on the $H_2/CO$ ratio required after $CO_2$ removal. If the crude gas has been made by a low temperature partial oxidation process using substantially pure oxygen, it will normally contain $CH_4$: the invention is effective in limiting the $CH_4$ content of the $CO_2$ stream. If the crude gas has been made by partial oxidation using air, or air moderately enriched with oxygen, it will contain $N_2$: in this case the invention is effective in limiting the $N_2$ content of the $CO_2$ stream.

Yet another potentially important application is in recovering $CO_2$ from mixtures with $CH_4$, for example in natural gas.

If the starting gas has been made by way of a reaction involving steam, it should be freed of unreacted steam before the adsorption step, e.g. by cooling to below 50°C and separation of liquid water so as to obtain a gas stream preferably containing less than about 1% v/v of vapour. The gas stream may be further dried before the adsorption step, but since water is readily desorbed at the temperature of operation and can easily be removed from the $CO_2$-rich stream, such further drying is generally not necessary.

The adsorption/depressurisation temperature is in the range 120 to 200°C. Conveniently it is about the same at adsorption and depressurisation, apart from changes due to exotherms of adsorption and endotherms of desorption.

The adsorbent should be selected such that, at the temperature of operation, the quantity of $CO_2$ adsorbed varies substantially with pressure. In this way a $CO_2$ stream of high purity and/or pressure can be obtained.

The PSA treatment can be broadly of the type wherein there is a plurality of adsorbent charges,

2

EP 0 178 833 B1

hereinafter termed beds, and each bed takes part, successively, in steps including adsorption, pressure equalisation, depressurisation to exterior, and repressurisation.

In the ensuing description of the preferred PSA processes, the terms "inlet" and "outlet" refer to the direction of flow of gas during the adsorption step, and the terms "co-current" and "counter-current" mean towards such outlet or inlet respectively.

The pressure of the raw, or starting, gas mixture entering the bed is in the range 25 to 50, especially 30 to 40, bar abs.

In the adsorption step, switching of the supply of the raw gas to a second bed is effected when the tail of the $CO_2$ front is at, or almost at, the bed outlet. The nearer the tail of the $CO_2$ front to the bed outlet when switching occurs the greater will be the purity of the recovered $CO_2$ but the less the extent of $CO_2$ removal will be. The $CO_2$ content of the unadsorbed gas will vary as the adsorption proceeds but it is preferred that the switching takes place at such time that the unadsorbed gas contains 0.1 to 2% v/v of $CO_2$ integrated over each adsorption step.

After switching the raw gas supply to another bed, the pressure in the first bed is reduced by an equalisation step wherein gas from the outlet of the first bed is fed to a recipient bed which has been depressurised to the exterior and may have been partly repressurised. Preferably the equalisation is effected by feeding the gas from the outlet of the first bed to the outlet of the recipient bed: this moves the adsorption front backwards and, depending on how much $CO_2$ was allowed to pass out at the end of the adsorption step, may introduce a small quantity of $CO_2$ into the outlet end of the recipient bed.

There may be one or more pressure equalisation steps. Thus, as in the relevant part of the 4-bed system depicted in Figure 2 of USP 3430418, on which the system described hereinafter is based, there may be a single equalisation step. Alternatively, as in the relevant parts of the modified 4-bed system depicted in Figure 2 of USP 3564816 or of the 5-bed system depicted in Figure 3 of USP 3430418, there may be two equalisation steps. Alternatively, as in the relevant parts of the systems using 6 or more beds, for example the 8-bed and 10-bed systems depicted in USP 3986849, there may be three equalisation steps. Although the pressure equalisations are illustrated by those references, as described below the PSA cycles that may be used in the process of the invention differ from the disclosed cycles in other respects.

After the pressure equalisation step, the bed is subjected to de-pressurisation. Whereas, in cycles shown in the above references, the depressurisation is co-current and the released gas is used to purge counter-currently another bed that has previously been counter-currently depressurised to exterior (usually to waste), this procedure is preferably only used if it is desired to maximise $CO_2$ recovery and moderate $CO_2$ purity is acceptable.

A preferred depressurisation process is carried out in two or more parts and effects $CO_2$ product releaase at relatively low pressure. The first part, or parts, hereinafter termed the "penultimate" depressurisation is stopped at a pressure such that the desorbed gas stream is relatively lean in $CO_2$ but rich in MB and $H_2$ (if present). Where this desorbed gas contains $H_2$, $CH_4$ and/or CO it is conveniently usable as fuel, especially for a gas turbine. Alternatively in such a multiple depressurisation, the penultimate depressurisation gas can be used to purge, preferably counter-currently, another bed. Thereafter a final depressurisation is carried out, giving a stream of desorbed gas which is rich in $CO_2$.

In such a two or more part depressurisation, the penultimate depressurisation can be co-current or counter-current. Co-current penultimate depressurisation is usually preferable since it removes more MB and $H_2$ (if present) and less $CO_2$ and thus gives a gas stream of higher $CO_2$ purity in the final depressurisation. The terminal pressure of such a co-current penultimate depressurisation with $CO_2$ product release is preferably at least 2 bar abs. and typically up to 10 bar abs. The gas released in this step is leaner in $CO_2$ the higher the terminal pressure.

The final depressurisation is preferably countercurrent but is not necessarily so. The terminal pressure of the final depressurisation is conveniently in the range 1 to 2 bar abs. The $CO_2$-rich stream released in this step is richer in $CO_2$ the lower the terminal pressure of the penultimate depressurisation. However the lower the latter pressure, the less will be the proportion of the $CO_2$ in the raw gas that is recovered in the final depressurisation $CO_2$ product stream.

It will be apparent that further elaborations are possible, for example in which a first penultimate depressurisation gas, lean in $CO_2$, is taken, a second penultimate depressurisation is used to supply gas to purge another bed, a counter-current final depressurisation is effected to give a $CO_2$-rich product gas stream, and then the bed is purged counter-currently.

As mentioned above, after final depressurisation, the bed may be purged with penultimate depressurisation gas from another bed. This can give further release, and hence recovery, of $CO_2$. Generally however no purge step using gas from outside the PSA cycle is needed.

As an alternative to a multi-part depressurisation there may be a single depressurisation giving a single $CO_2$-containing gas stream, without the need for a purge.

After final depressurisation, (and purge, if used) the bed is repressurised. The first part of the repressurisation may be by feeding to the bed outlet the gas from another bed that has just ended its adsorption step and is undergoing the aforementioned pressure equalisation.

During or following this first repressurisation, the bed is repressurised with the unadsorbed product gas, i.e. the gas mixture from which $CO_2$ has been recovered, by diverting this product gas from the outlet stream of a bed undergoing adsorption duty into the bed outlet. This feed of product gas preferably takes

3

EP 0 178 833 B1

place throughout the equalisation as well as after it, so that the rate of flow of such gas does not vary much during the whole cycle. Alternatively or additionally, the product gas feed may be from a reservoir.

In order to limit the magnitude of fluctuations in the composition and flow rate of the gas streams leaving the PSA system, the latter preferably includes enough beds to permit at least two beds to be used simultaneously, but out of step with one another, on each of the adsorption, depressurisation with $CO_2$ product release, and purge with $CO_2$ release (if used).

The adsorbent includes a zeolite, since zeolites are capable of adsorbing $CO_2$ much more preferentially to the MB gases than the other adsorbents. Such specificity is less at the high temperatures used in the process of the invention than at conventional PSA temperatures, but is fully adequate. The effect of the high temperature is to produce a $CO_2$ adsorption isotherm with a zeolite that resembles the ambient temperature isotherms for active carbon and silica gel. A suitable zeolite is of the A type, for example calcium zeolite A which is defined in D. W. Breck's "Zeolite Molecular Sieves" and is available from several manufacturers under different trade names. Table 1 sets out values of the adsorption constants K, where

$$K = \frac{\text{kg. mols of adsorbed gas per kg of adsorbent}}{\text{pressure in bar abs.}}$$

for $CO_2$ and $N_2$ and of the ratio $K_{CO2}/K_{N2}$ for a zeolite and an active carbon. The values at 30, 70 and 100°C are quoted from page 565 of "Gas Purification" by A. L. Kohl and S. C. Riesenfeld, 3rd ed. 1979 (Gulf Publications, Houston, Texas, USA) and those at 150°C are obtained by Clausius Clapeyron-type calculation.

TABLE 1

| | | K, kg. mol kg$^{-1}$ bar$^{-1}$ at T°C | | | |
|---|---|---|---|---|---|
| | | T=30 | T=70 | T=100 | T=150 |
| Zeolite | $N_2$ | $26 \times 10^{-5}$ | $11.9 \times 10^{-5}$ | $7.4 \times 10^{-5}$ | $3.9 \times 10^{-5}$ |
| | $CO_2$ | 0.161 | 0.041 | 0.0179 | 0.0058 |
| | Ratio | 619 | 344 | 241 | 148 |
| Carbon | $N_2$ | $41.5 \times 10^{-5}$ | $23.8 \times 10^{-5}$ | $16.9 \times 10^{-5}$ | $10.7 \times 10^{-5}$ |
| | $CO_2$ | $4.46 \times 10^{-3}$ | $1.45 \times 10^{-3}$ | $0.73 \times 10^{-3}$ | $0.29 \times 10^{-3}$ |
| | Ratio | 10.7 | 6.1 | 4.33 | 2.71 |

The present invention is of particular use in combinations wherein

(a) the unadsorbed gas obtained by the process of the invention from a gas mixture containing $H_2$ as well as MB and $CO_2$ is fed to a downstream PSA system operated at a lower temperature: in the downstream PSA system some or all of the MB in the unadsorbed gas from the process of the invention is removed. In this case, where the MB comprises CO, the unabsorbed gas from the process of the invention may be subjected to selective CO removal, such as by oxidation or methanation, before the second PSA stage; and/or

(b) the product $CO_2$-containing gas, whether it is a complete single depressurisation gas or the $CO_2$-rich final stage depressurisation gas, is fed to a $CO_2$ concentration system, such as an adsorptive or liquid-absorption or distillation $CO_2$ recovery system; for this purpose the product $CO_2$-containing gas can, if desired, be compressed; and/or

(c) with or without the above-mentioned $CO_2$ concentration, the $CO_2$-containing product gas is fed to urea synthesis; and/or

(d) unadsorbed gas from the downstream PSA system of the aforementioned two PSA arrangement is fed to a hydrogenation process or, where the MB comprises $N_2$, to ammonia synthesis, the latter advantageously being the source of ammonia for the urea synthesis where, as mentioned above, the $CO_2$-containing product is fed to urea synthesis; and/or

(e) if the process as a whole is to produce a hydrogen-rich gas stream or ammonia synthesis gas, the chemical stage preceding the PSA of the invention is a catalytic shift stage preferably decreasing the CO content to at most 1, preferably under 0.55% v/v as a dry basis. Cooling and water removal and possibly drying are effected before the PSA. If the process as a whole is to produce hydrocarbons or oxygenated hydrocarbons, the shift stage may be an incomplete or partially by-passed shift stage;

(f) where the process as a whole is to produce ammonia synthesis gas, upstream of shift and water removal the preferred stage is hydrocarbon air-steam reforming in which catalytic primary steam reforming is effected in indirect heat exchange with catalytic air reforming and the product raw gas has an $(H_2+CO)/(MB+CO)$ molar ratio in the range 1.25 to 2.5, especially 1.5 to 2.1, a $CO_2$ content in the range 10 to 25% v/v, on a dry basis, and at least 90% v/v of the MB is $N_2$.

4

EP 0 178 833 B1

Preferred forms of the invention are shown in the accompanying drawings, in which

Figure 1 is a block diagram representing the use of the invention in producing high strength $CO_2$ and ammonia synthesis gas; and

Figure 2 is a diagram of the steps involved in one PSA system using the process of the invention.

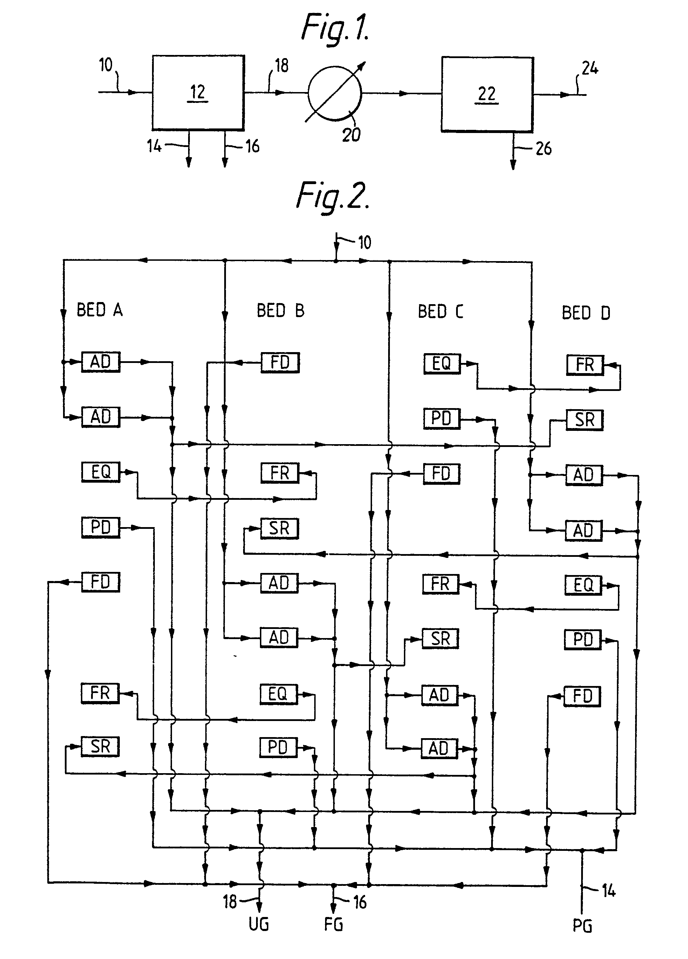

In the process according to Figure 1, which is an example of combination process (a) above, a stream of raw ammonia synthesis gas is produced by the sequence of natural gas/steam catalytic primary reforming, air secondary reforming, heat exchange between secondary reforming outlet as the source of heat for primary reforming, catlaytic shift, cooling and water separation (combination (e) above). The water-depleted gas is fed at 10 to "hot" PSA unit 12, which includes at least 4 beds of adsorbent and programmed valves providing an uninterrupted succession of steps of adsorption, pressure equalisation, depressurisation and repressurisation. The cycle in unit 12 is characterised by two separate steps of depressurisation, the first down to a moderate level producing a gas stream 14 relatively lean in $CO_2$, the second from that moderate level downwards producing a gas stream 16 rich in $CO_2$. The $CO_2$-lean gas 14 is fed out for use as fuel, for example (being at superatmospheric pressure) in a gas turbine (not shown). The $CO_2$-rich gas 16 is fed out to $CO_2$ users (not shown). The unadsorbed gas from unit 12 is depleted in $CO_2$ but requires further adjustment and purification to produce ammonia synthesis gas.

The unadsorbed gas 18 from unit 12 is cooled in heat exchanger 20 to a temperature at which $H_2$ and MB gases can be separated adsorptively. As a result of the conditions of primary and secondary reforming, the $H_2/N_2$ ratio of the gas entering unit 12 was less than is required in ammonia synthesis and this is not much changed by the "hot" PSA of the invention. Thus part of the $N_2$, as well as $CO_2$ and $CH_4$ have to be removed; to this end the cooled gas from heat exchanger 20 is fed to a PSA unit 22 of the special type described in our EP—A—0157480 in which, in each adsorption step, the $H_2/N_2$ ratio is initially low, intermediately high, and finally low but integrates over the whole step to the required ratio, usually in the range 2.5 to 3.0. The unadsorbed gas 24 from this second PSA unit 22 is fed out to a compressor and an ammonia synthesis plant, which are conventional and not shown. The steps in PSA unit 22 can include pressure equalisation, depressurisation and repressurisation but, unlike unit 12, the gas evolved in cocurrent depressurisation is not, or not all, fed out separately but is, at least partly, used to purge a bed that has undergone counter-current depressurisation to exterior. The resulting depressurisation and purge gas 26 has some fuel value.

To avoid gross fluctuations in gas compositions, units 12 and 22 both contain enough beds, for example 10 or more, to permit 3 beds to be simultaneously on each duty but out of phase with one another.

Figure 2 shows a 4-bed system providing a preferred PSA cycle for use in the process of the invention. In this figure, each laterally aligned "box" represents a particular time interval, while successive "boxes" downwards represent successive time intervals, in the PSA cycle. The gas flows are represented so that the inlet to each bed is on the left hand side and the outlet on the right hand side. Although, for clarity, two adsorption "boxes" have been shown for each bed, it will be appreciated that, in each bed, the adsorption stage is continuous. Likewise two repressurisation boxes are shown. As described above, in the first repressurisation the bed may be receiving both gas from a bed undergoing pressure equalisation and unadsorbed gas from a bed undergoing adsorption duty. It will further be appreciated that each box does not necessarily indicate the same time interval: thus considering bed A, while the pressure equalisation step has to take place during the repressurisation of bed B, the penultimate and final depressurisation steps can occur at any subsequent time prior to the pressure equalisation step of bed B.

In Figure 2 the following abbreviations are employed

AD=adsorption
EQ=equalisation
PD=penultimate depressurisation
FD=final depressurisation
FR=first repressurisation
SR=second repressurisation
RG=raw gas
UG=unadsorbed gas
FG=final depressurisation product gas
PG=penultimate depressurisation product gas.

As explained above, the process of the invention is characterised by a high operating temperature and, in preferred forms by at least one penultimate depressurisation to give at least one $CO_2$-lean gas 14 and by final depressurisation to give $CO_2$-rich gas 16. If the non-preferred cycle using a purge step is used, then the penultimate depressurisation (or the last of these if there are more than one) is carried out co-currently and the gas is fed countercurrently through the recipient beds as follows:

| Depressurising bed | Recipient bed |
| --- | --- |
| A | C |
| B | D |
| C | B |
| D | A |

5

The gas leaving the recipient bed during purge is usually united with the gas that left that bed during final depressurisation.

As an example of the process of the invention, typical temperatures, pressures, and gas flow rates are shown in Table 2 for the recovery of $CO_2$ from a raw ammonia synthesis gas to be used in producing 1000 $t \cdot d^{-1}$ of ammonia. In this mode of operation, termed mode A, which is the mode depicted in Figure 2, the penultimate depressurisation is co-current and is stopped at a pressure of 3 bar abs to release a desorbed gas that is relatively $CO_2$-lean and is of use as a fuel. The final depressurisation, which is counter-current is to a terminal pressure of 1 bar abs. and gives a $CO_2$-rich product stream.

Other useful modes of operation with the same raw gas, inlet pressure and temperature, are as follows:

Mode B: as mode A but the penultimate depressurisation is counter-current.

Mode C: the penultimatae depressurisation is counter current and is continued to a terminal pressure of 2 bar abs; the bed is then purged, counter-current by depressurisation gas released co-currently from another bed. The gas released as a result of the penultimate depressurisation is mixed with that purged from the bed to give a single $CO_2$-containing product gas stream.

Mode D: as mode B but the terminal pressure of the final depressurisation is 1.1 bar abs and the gas released from the penultimate depressurisation is mixed with that from the final depressurisation to give a single $CO_2$-containing product stream.

The performance of these modes of operation is summarised in Table 3, in comparison with a "cold" PSA handling the same raw gas at a PSA inlet temperature of 35°C.

TABLE 2

| Stream | Temp (°C) | Press. (bar abs) | Gas flow rate (kg. mol. h$^{-1}$) | | | | | | |
|---|---|---|---|---|---|---|---|---|---|
| | | | CO | CO$_2$ | H$_2$ | CH$_4$ | N$_2$ | Ar | Total |
| 10 raw gas | 180 | 35 | 29 | 1303 | 4385 | 39 | 2383 | 59 | 8198 |
| 14 penult. depress. | 175 | 3 | 7 | 90 | 104 | 5 | 126 | 12 | 344 |
| 16 final depress. | 175 | 1 | 5 | 1112 | 14 | 0 | 14 | 0 | 1145 |
| 18 unadsorbed 22 inlet | 185 } 35 } | 34 | 17 | 101 | 4267 | 34 | 2243 | 47 | 6709 |
| 24 syngas | 40 | 34 | 9 | 0 | 4101 | 10 | 1433 | 31 | 5584 |
| 26 waste | 30 | 3 | 8 | 101 | 166 | 24 | 810 | 16 | 1125 |

TABLE 3

| Mode | CO$_2$ Product stream | | | Unadsorbed H$_2$-rich gas stream | |
|---|---|---|---|---|---|
| | CO$_2$ Content (% v/v) | CO$_2$ Recovery (%) | Pressure (bar abs.) | H$_2$ Recovery (%) | CO$_2$ Content (% v/v) |
| A | 97.1 | 85 | 1 | 97.3 | 1.5 |
| B | 76.0 | 50 | 1 | 94.4 | 0.2 |
| C | 78.0 | 98 | 2.0 | 97.0 | 0.4 |
| D | 62.0 | 99 | 1.1 | 94.4 | 0.2 |
| "cold" | 51.3 | 100 | 1.5 | 96.3 | 0 |

It is evident that mode A produces a high purity $CO_2$ product stream 16 that can be very economically processed to further products, as well as a readily combustible fuel stream 14. The percentage $H_2$ recovery in unadsorbed gas is also very high, but the $CO_2$ content of such gas is also relatively high. If the

EP 0 178 833 B1

unadsorbed gas were subjected to CO removal by selective oxidation or selective methanation it could be converted to synthesis-ready ammonia synthesis gas by a second PSA stage as described in EP—A—0157480 without methanation after the second PSA stage. Alternatively it could be subjected to such a second PSA stage without such CO removal and the unadsorbed gas could be methanated to give synthesis-ready ammonia synthesis gas.

Modes B and D produce as the unadsorbed gas, a $H_2$-rich gas of lower $CO_2$ content: this $H_2$-rich gas can be obtained, for example, by shortening the adsorption step so that less $CO_2$ breakthrough occurs. The percentage $H_2$ recovery is correspondingly lower than in mode A. To obtain a $CO_2$-rich stream of adequate purity the penultimate depressurisation in mode B is larger and thus only a 50% recovery of $CO_2$ in the final depressurisation is possible. Alternatively, in mode D, a single $CO_2$ stream is taken, with the result that a 99% $CO_2$ recovery at 62% purity is obtained. Such a purity level is, however, greater than in the "cold" PSA process of EP—A—0157480.

## Claims

1. A process for the recovery of carbon dioxide from a mixture thereof with at least one medium boiling gas selected from nitrogen, methane, argon, and carbon monoxide, comprising a pressure swing adsorption sequence wherein

i) the mixture at elevated pressure is contacted with a first charge of a solid zeolite adsorbent effective to adsorb carbon dioxide preferentially;

ii) when the first charge of adsorbent is sufficiently loaded with carbon dioxide, the mixture flow is switched to a further charge of adsorbent which is fresh or regenerated; and

iii) a gas stream enriched in carbon dioxide as compared with the starting mixture is recovered by depressurising the first charge;

characterised in that mixture is fed to the adsorbent at a pressure in the range 25 to 50 bar abs and in that the adsorption and depressurisation steps are each conducted at temperatures in the range 120 to 200°C.

2. A process according to claim 1 wherein there are a plurality of adsorbent charges and each charge takes part, successively, in steps including adsorption, pressure equalisation, depressurisation to exterior, and repressurisation and said depressurisation to exterior is effected in at least two stages.

3. A process according to claim 2 wherein the penultimate depressurisation is co-current.

4. A process according to claim 2 or claim 3 wherein the final depressurisation is counter-current.

5. A process according to any one of claims 2 to 4 wherein the terminal pressure of the penultimate depressurisation is in the range 2 to 10 bar abs., and the terminal pressure of the final depressurisation is in the range 1 to 2 bar abs.

6. A process according to any one of claims 1 to 5 wherein the gas mixture comprises carbon dioxide, hydrogen, and nitrogen.

7. A process according to any one of claims 1 to 6 wherein the volume ratio of said at least one medium boiling gas to carbon dioxide is in the range 0.2 to 5.

8. A process according to claim 7 wherein the gas mixture contains at least 40% by volume of hydrogen, has a hydrogen to medium boiling gas molar ratio in the range 1.5 to 2.5, and at least 90% by volume of said at least one medium boiling gas is nitrogen.

9. A process according to claim 6 or claim 8 wherein the unadsorbed gas, comprising medium boiling gas and hydrogen, from the pressure swing adsorption sequence is fed, at a lower temperature, to a second pressure swing adsorption sequence effective to separate some or all of the medium boiling gas from the hydrogen.

## Patentansprüche

1. Verfahren zur Rückgewinnung von Kohlendioxid aus einer Mischung davon mit mindestens einem mittelsiedenden Gas, das aus Stickstoff, Methan, Argon und Kohlenmonoxid ausgewählt ist, mit einer Druckschwankungs-Adsorptionsfolge, bei der

i) die Mischung bei erhöhtem Druck mit einer ersten Charge eines festen Zeolith-Adsorptionsmittels, das wirksam ist, um Kohlendioxid bevorzugt zu adsorbieren, in Berührung gebracht wird,

ii) der Mischungsstrom zu einer weiteren Charge des Adsorptionsmittels, die frisch oder regeneriert ist, umgeschaltet wird, wenn die erste Charge des Adsorptionsmittels in ausreichendem Maße mit Kohlendioxid beladen ist, und

iii) ein Gasstrom, der im Vergleich zur Ausgangsmischung mit Kohlendioxid angereichert ist, durch Aufhebung des Druckes der ersten Charge zurückgewonnen wird,

dadurch gekennzeichnet, daß die Mischung dem Adsorptionsmittel mit einem Druck von 25 bis 50 bar abs. zugeführt wird und daß die Schritte der Adsorption und der Aufhebung des Druckes jeweils bei Temperaturen von 120 bis 200°C durchgeführt werden.

2. Verfahren nach Anspruch 1, bei dem es mehrere bzw. eine Vielzahl von Adsorptionsmittelchargen gibt und jede Charge aufeinanderfolgend an Schritten teilnimmt, die die Adsorption, den Druckausgleich,

7

EP 0 178 833 B1

die Aufhebung des Druckes nach außen und das erneute Unter-Druck-Setzen umfassen, und bei dem die erwähnte Aufhebung des Druckes nach außen in mindestens zwei Stufen durchgeführt wird.

3. Verfahren nach Anspruch 2, bei dem die vorletzte Aufhebung des Druckes im Gleichstrom abläuft.

4. Verfahren nach Anspruch 2 oder Anspruch 3, bei dem die letzte Aufhebung des Druckes im Gegenstrom abläuft.

5. Verfahren nach einem der Ansprüche 2 bis 4, bei dem der Enddruck der vorletzten Aufhebung des Druckes 2 bis 10 bar abs. und der Enddruck der letzten Aufhebung des Druckes 1 bis 2 bar abs. beträgt.

6. Verfahren nach einem der Ansprüche 1 bis 5, bei dem die Gasmischung Kohlendioxid, Wasserstoff und Stickstoff enthält.

7. Verfahren nach einem der Ansprüche 1 bis 6, bei dem das Volumenverhältnis des erwähnten mindestens einen mittelsiedenden Gases zu Kohlendioxid 0,2 bis 5 beträgt.

8. Verfahren nach Anspruch 7, bei dem die Gasmischung mindestens 40 Vol.-% Wasserstoff enthält und ein 1,5 bis 2,5 betragendes Molverhältnis von Wasserstoff zu mittelsiedendem Gas hat und bei dem mindestens 90 Vol.-% des erwähnten mindestens einen mittelsiedenden Gases Stickstoff sind.

9. Verfahren nach Anspruch 6 oder Anspruch 8, bei dem das nichtadsorbierte Gas aus der Druckschwankungs-Adsorptionsfolge, das mittelsiedendes Gas und Wasserstoff enthält, mit einer niedrigeren Temperatur einer zweiten Druckschwankungs-Adsorptionsfolge zugeführt wird, die wirksam ist, um etwas von dem mittelsiedenden Gas oder das ganze mittelsiedende Gas von dem Wasserstoff abzutrennen.

## Revendications

1. Procédé pour la récupération de dioxyde de carbone à partir d'un mélange de celui-ci avec au moins un gaz à point d'ébullition moyen choisi parmi l'azote, le méthane, l'argon et le monoxyde de carbone, comprenant une séquence d'adsorption à alternance de pressions dans lequel:

i) le mélange à pression élevée est mis en contact avec une première charge d'un adsorbant zéolitique solide efficace pour adsorber le dioxyde de carbone de façon préférentielle;

ii) lorsque la première charge d'adsorbant est suffisamment chargée de dioxyde de carbone, le courant de mélange est dirigé vers une autre charge d'adsorbant qui est frais et régénéré; et

iii) un courant gazeux enrichi en dioxyde de carbone par rapport au mélange de départ est récupéré par dépressurisation de la première charge;

caractérisé en ce que ce mélange est envoyé dans l'adsorbant à une pression dans la gamme de 25 à 50 bars abs. et en ce que les étapes d'adsorption et de dépressurisation sont conduites chacune à des températures dans la gamme de 120 à 200°C.

2. Procédé suivant la revendication 1, caractérisé en ce qu'il y a un grand nombre de charges d'adsorbant et que chaque charge prend part successivement à des étapes comprenant une adsorption, une égalisation de pression, une dépressurisation vers l'extérieur et une repressurisation et que cette dépressurisation vers l'extérieur est effectuée en au moins deux étapes.

3. Procédé suivant la revendication 2, caractérisé en ce que la dépressurisation pénultième est à co-courant.

4. Procédé suivant la revendication 2 ou la revendication 3, caractérisé en ce que la dépressurisation finale est à contre-courant.

5. Procédé suivant l'une des revendications 2 à 4, caractérisé en ce que la pression terminale de la dépressurisation pénultième est dans la gamme de 2 à 10 bars abs., et que la pression terminale de la dépressurisation finale est dans la gamme de 1 à 2 bars abs.

6. Procédé suivant l'une quelconque des revendications 1 à 5, caractérisé en ce que le mélange gazeux comprend du dioxyde de carbone, de l'hydrogène et de l'azote.

7. Procédé suivant l'une quelconque des revendications 1 à 6, caractérisé en ce que le rapport volumique du gaz à point d'ébullition moyen au moins présent au dioxyde de carbone est dans la gamme de 0,2 à 5.

8. Procédé suivant la revendication 7, caractérisé en ce que le mélange gazeux contient au moins 40% en volume d'hydrogène, a un rapport molaire d'hydrogène à gaz à point d'ébullition moyen dans la gamme de 1,5 à 2,5, et qu'au moins 90% en volume de ce gaz à point d'ébullition moyen au moins présent sont constitués par de l'azote.

9. Procédé suivant la revendication 6 ou la revendication 8, caractérisé en ce que le gaz non-adsorbé, comprenant un gaz à point d'ébullition moyen et de l'hydrogène provenant de la séquence d'adsorption à alternance de pressions est envoyé à une température inférieure dans une seconde séquence d'adsorption à alternance de pressions efficace pour séparer tout ou partie du gaz à point d'ébullition moyen de l'hydrogène.

# Fig.1.

# Fig.2.